# EUROPÄISCHE PATENTSCHRIFT

(11) **EP 2 789 038 B1**
(45) Veröffentlichungstag und Bekanntmachung des Hinweises auf die Patenterteilung: **08.03.2017**
(21) Anmeldenummer: 13700854.6
(22) Anmeldetag: 11.01.2013
(51) Int. Cl.: H01M 8/0202, H01M 8/04089, H01M 8/2483, H01M 8/2432, H01M 12/08, H01M 8/18, H01M 8/0606

(54) **STACK FÜR EINEN ELEKTRISCHEN ENERGIESPEICHER**
STACK FOR AN ELECTRICAL ENERGY ACCUMULATOR
EMPILEMENT POUR ACCUMULATEUR D'ÉNERGIE ÉLECTRIQUE

(30) Priorität: 25.01.2012 DE 102012201069
(43) Veröffentlichungstag der Anmeldung: 15.10.2014
(73) Patentinhaber: Siemens Aktiengesellschaft, 80333 München (DE)
(72) Erfinder: DRENCKHAHN, Wolfgang, 91058 Erlangen (DE); GREINER, Horst, 91301 Forchheim (DE); ROTHFISCHER, Johann, 91058 Erlangen (DE)
(86) Internationale Anmeldenummer: PCT/EP2013/050443
(87) Internationale Veröffentlichungsnummer: WO 2013/110506

(56) Entgegenhaltungen:
- DE-A1-102009 057 720
- US-A1- 2007 202 385

## Beschreibung

Stack für einen elektrischen Energiespeicher Zur Speicherung von überschüssigem elektrischem Strom, der beispielsweise bei der Stromerzeugung durch erneuerbare Energiequellen oder durch Kraftwerke anfällt, die im Bereich des optimalen Wirkungsgrades betrieben werden und für den temporär kein Bedarf im Netz besteht, werden verschiedene technische Alternativen angewandt. Eine davon ist die wiederaufladbare Oxidbatterie (Rechargeable Oxide Battery, ROB). ROBs werden üblicherweise bei Temperaturen zwischen 600°C und 800°C betrieben, hierbei wird Sauerstoff, der an einer Luftelektrode der elektrischen Zelle zugeführt wird, in Sauerstoffionen umgewandelt, durch einen Festkörperelektrolyten transportiert und zur gegenüberliegenden Speicherelektrode gebracht. Dort findet eine Redoxreaktion statt, die je nach Lade- oder Entladeprozess elektrischen Strom aufnimmt oder erzeugt. Aufgrund der hohen benötigten Temperaturen für diesen Prozess ist die Werkstoffauswahl für die verwendeten Zellenwerkstoffe und Konstruktion der Zellenbauteile sowie die Anordnung des Speichermediums sehr komplex. Insbesondere leiden die einzelnen Komponenten nach mehreren Redoxzyklen, die bei den besagten Betriebstemperaturen betrieben werden.

Ein aus dem Stand der Technik bekannter Stack für einen elektrischen Energiespeicher gemäß dem Oberbegriff des Anspruchs 1 ist der Druckschrift DE 10 2009 057720 A1 offenbart.

Aufgabe der Erfindung ist es daher, einen elektrischen Energiespeicher auf Basis einer ROB bereitzustellen, der gegenüber dem Stand der Technik einen kostengünstigen, montagetechnisch einfach gestalteten und temperaturbeständigen Aufbau eines Stacks bzw. einer Speicherzelle gewährleistet.

Die Lösung der Aufgabe besteht in einem Stack für elektrischen Energiespeicher gemäß Anspruch 1.

Der Stack für einen elektrischen Energiespeicher nach Patentanspruch 1 umfasst mindestens eine Speicherzelle, die wiederum eine Speicherelektrode (negative Elektrode) und eine Luftelektrode (positive Elektrode) umfasst. Die Luftelektrode steht dabei mit einer Luftzufuhrvorrichtung in Verbindung, wobei die Luftzufuhrvorrichtung eine Luftverteilungsplatte umfasst. Der erfindungsgemäße Stack zeichnet sich dadurch aus, dass der Stack zudem eine Wasserdampfzuführvorrichtung umfasst, die in Kontakt mit der Speicherelektrode steht wobei der Wasserdampf mit einem stationären Überdruck gegenüber eines Umgebungsdrucks vorliegt und
dass zudem, die Luftverteilungsplatte mindestens ein Element der Wasserzufuhrvorrichtung umfasst.

Der Vorteil der vorliegenden Erfindung besteht darin, dass eine Luftverteilungsplatte gleichzeitig eine Wasserdampfzufuhrvorrichtung umfasst. Das heißt Luftverteilung und Wasserdampfverteilung sind in einem Bauteil zusammengefügt und integriert. Dies führt zu einer deutlichen Vereinfachung der Montage des Stacks. Der Montageaufwand kann hierdurch erheblich reduziert werden. Ferner wird auch der benötigte Bauraum deutlich reduziert. Dies führt dazu, dass pro Volumeneinheit des benötigten Bauraums mehr Energie gespeichert werden kann. Der elektrische Energiespeicher kann somit kostengünstiger hergestellt werden und benötigt weniger Platz.

In einer bevorzugten Ausgestaltungsform der Erfindung weist die Luftverteilungsplatte mindestens zwei voneinander getrennte Vertiefungen auf, die jeweils mit einer Bohrung zur Betriebsmittelzufuhr oder Betriebsmittelabfuhr versehen sind. Die getrennten Vertiefungen dienen entweder zur Luftzufuhr oder zur Wasserdampfzufuhr. Sie sind somit Bestandteil der Luftzufuhrvorrichtung oder der Wasserdampfzufuhrvorrichtung. Unter Betriebsmittel wird hierbei ganz allgemein der Zufuhr der benötigten Luft bzw. des benötigten Wasserdampfes bezeichnet, Betriebsmittel können jedoch auch Spülgase wie Stickstoff oder ein Stickstoffwasserdampfgemisch sein, je nach Prozesszustand werden unterschiedliche Betriebsmittel durch die Bohrungen in die Luftzufuhrvorrichtung bzw. in die Wasserdampfzufuhrvorrichtung geleitet. Dabei kann es zweckmäßig sein, dass sowohl die Luftzufuhrvorrichtung als auch die Wasserdampfzufuhrvorrichtung in der Luftverteilungsplatte jeweils zwei Vertiefungen mit Bohrungen aufweisen, wobei eine der jeweiligen Vertiefungen zur Betriebsmittelzufuhr und die andere Vertiefung zur Betriebsmittelabfuhr dient.

In einer weiteren vorteilhaften Ausgestaltungsform des Stacks weist diese zudem eine Bodenplatte und mindestens eine sogenannte Interconnectorplatte (integriertes Bauteil) auf. Sowohl die Bodenplatte als auch die Interconnectorplatte bzw. das integrierte Bauteil weisen dabei jeweils mindestens zwei vertikal durchgehende Aussparungen auf, die bei der Stapelung der Platten im zusammengebauten Stack jeweils mindestens einen Luftkanal und mindestens einen Wasserdampfkanal bilden.

Dabei stehen jeweils eine Vertiefung in der Luftverteilungsplatte mit dem Luftkanal und die zweite Vertiefung in der Luftverteilungsplatte mit dem Wasserdampfkanal in Verbindung.

Grundsätzlich ist es zweckmäßig, wenn mindestens zwei Wasserdampfkanäle vorgesehen sind, die in Verbindung mit jeweils einer Vertiefung in der Luftverteilungsplatte stehen. Hierbei handelt es sich insbesondere um einen Wasserdampfkanal zur Wasserdampfzufuhr und einen Wasserdampfkanal zur Wasserdampfabfuhr.

Ferner ist bevorzugt eine Deckplatte vorgesehen, die mit einer Luftelektrode in Verbindung steht. Hierbei handelt es sich um eine Abschlussplatte des Stacks, die wiederum bevorzugt Vertiefungen aufweist, die mit dem Luftkanal in Verbindung stehen und von denen mindestens eine Bohrung zu einem Kanal führt, der im direkten Kontakt mit der Luftelektrode steht. Diese Anordnung führt dazu, dass mit der Deckplatte, also der Abschlussplatte des Stacks, der Kanal zur Luftzufuhr über die Luftelektrode geleitet wird und somit umgeleitet wird und wieder zurück zur Luftverteilungsplatte in einen weiteren Kanal gelenkt wird.

Weitere Ausgestaltungsformen und weitere Merkmale der Erfindungen werden anhand der folgenden Figuren näher beschrieben. Merkmale mit derselben Bezeichnung jedoch in unterschiedlichen Ausgestaltungsformen behalten dabei dasselbe Bezugszeichen. Es handelt sich um rein exemplarische Ausgestaltungsformen, die keine Einschränkung des Schutzbereiches darstellen.

Dabei zeigen:
Figur 1 eine schematische Darstellung der Wirkungsweise einer ROB,
Figur 2 eine Explosionsdarstellung zum Aufbau eines Stacks in einer ROB,
Figur 3, die Explosionsdarstellung aus Figur 2 mit entgegengesetzter Blickrichtung,
Figur 4 einen Schichtaufbau zur detaillierten Darstellung einer Speicherzelle,
Figur 5 ein integriertes Bauteil mit Blick auf die Luftzuführseite,
Figur 6 ein integriertes Bauteil mit Blick auf die Speicherseite,
Figur 7 eine Querschnittsdarstellung des integrierten Bauteils,
Figur 8 eine Draufsicht auf eine Grundplatte mit Luft- und Wasserzuführvorrichtung,
Figur 9 eine alternative Ausgestaltungsform der Grundplatte nach Figur 8,
Figur 10 eine Deckplatte,
Figuren 11 - 16 unterschiedliche Strömungsrichtungen der Luftzufuhr.

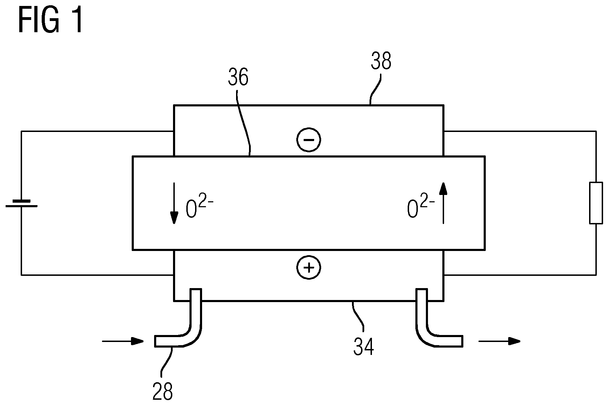

Anhand der Figur 1 soll schematisch die Wirkungsweise einer ROB beschrieben werden, insoweit dies für die folgende Beschreibung der Erfindung notwendig ist. Ein üblicher Aufbau der ROB besteht darin, dass über eine positive Elektrode ein Prozessgas, insbesondere Luft über eine Gaszufuhr 28 eingelasen wird, wobei aus der Luft Sauerstoff entzogen wird. Aus diesem Grund wird die positive Elektrode im Weiteren als Luftelektrode bezeichnet. Der Sauerstoff gelangt in Form von Sauerstoffionen (O²⁻) durch einen, an der positiven Elektrode anliegenden Feststoffelektrolyten 36 zu einer negativen Elektrode 38. An der negativen Elektrode ist ein Speichermedium in Form eines porösen Materials, das je nach Betriebszustand (Laden/Entladen) in elementarer Form oder in Oxidform vorliegt, angeordnet, das ein funktional wirkendes oxidierbares Material, insbesondere ein Metall, beispielsweise Eisen, enthält. Aus diesem Grund wird die negative Elektrode auch als Speicherelektrode bezeichnet, wobei dieser Begriff im Weiteren verwendet wird.

Über ein, bei Betriebszustand der Batterie gasförmiges Redoxpaar beispielsweise H₂/H₂O, werden die durch den Festkörperelektrolyten transportierten Sauerstoffionen durch Porenkanäle eines porösen Körpers, der als Speichermedium dient, zu dem oxidierbaren Material, also dem Metall, transportiert bzw. abgezogen. Je nachdem, ob ein Lade- oder Entladevorgang vorliegt, wird das Metall bzw. Metalloxid oxidiert oder reduziert und der hierfür benötigte Sauerstoff durch das gasförmige Redoxpaar H₂-H₂O angeliefert oder zum Festkörperelektrolyten zurücktransportiert (dieser Mechanismus wird als Shuttlemechanismus bezeichnet).

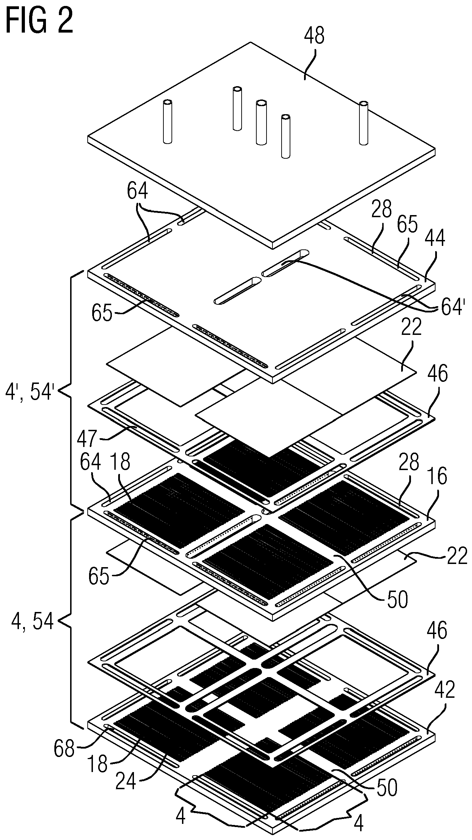

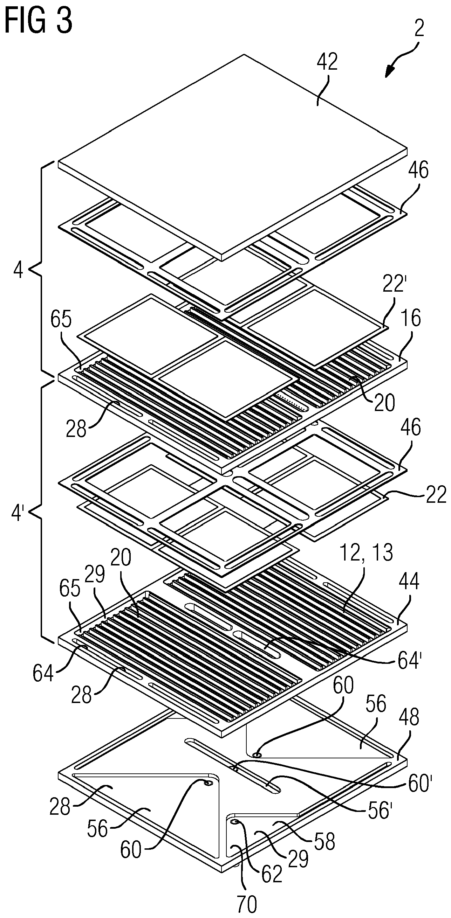

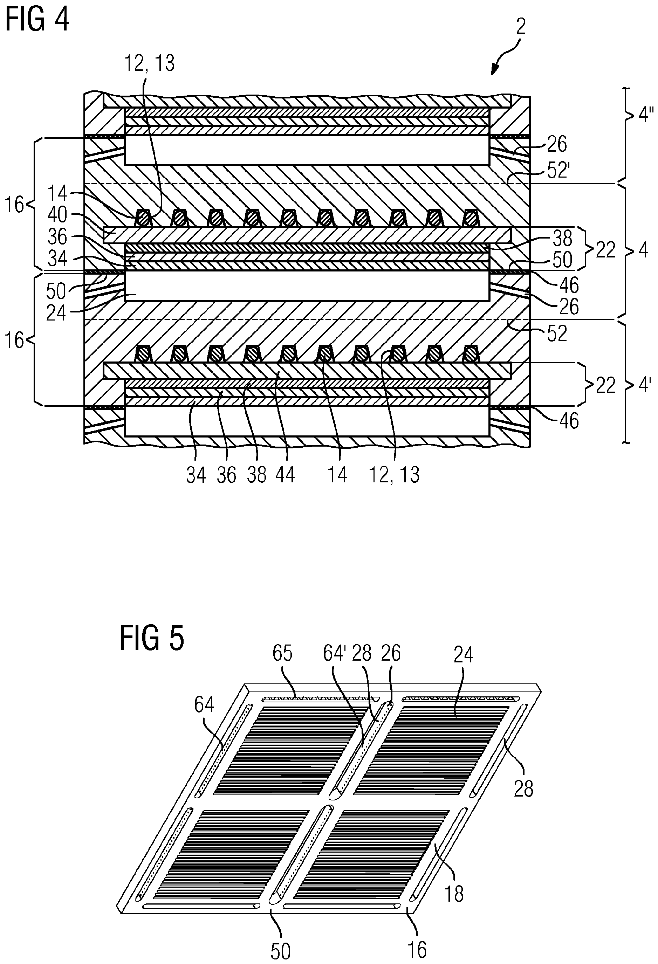

Anhand von Figur 2 und 3 soll nun der Aufbau eines Stacks, der wiederum Bestandteil des elektrischen Energiespeichers in seiner Gesamtheit ist, wobei hierfür in der Regel mehrere Stacks zusammengefasst werden, dargestellt werden. Die Explosionsdarstellung in Figur 2 ist in der Art aufgebaut, dass der Blick auf eine Luftzufuhrseite 18 der jeweiligen Speicherzelle 4 gerichtet ist, wobei eine Speicherseite 20 jeweils verdeckt ist. Die Figur 3 hingegen stellt lediglich eine um 180° gedrehte Ansicht der Figur 2 dar. Bei der Figur 3 handelt es sich von unten nach oben gesehen, um eine produktionstechnisch gesehen günstige Montagereihenfolge. Die einzelnen Komponenten seien anhand der Figur 2 im Folgenden von unten nach oben erläutert. Zunächst wird eine Deckplatte 42 angeordnet, auf der Kanäle 24 zur Luftzufuhr eingebracht sind. Die bezüglich der Grundplatte 42 sichtbare Seite der elektrischen Speicherzelle 4 wird als Luftführungsseite 18 bezeichnet. Die Grundplatte 42 weist eine ebene Fläche 50 auf, auf die eine Dichtung 46 aufgelegt wird. Die Dichtung 46 besteht beispielsweise aus einer Glasfolie, die bei den entsprechenden Temperaturen zwischen 600°C und 800°C die geforderten Dichtungseigenschaften aufweist. Auf die Dichtung 46 wird eine Elektrodenstruktur 22 aufgelegt, wobei hierbei die positive Elektrode 34 nach unten zu den Kanälen 24 zeigt. Auf die Wirkungsweise der Elektrodenstruktur wird noch bezüglich Figur 4 näher eingegangen.

Auf die Elektrodenstruktur 22 wird ein integriertes Bauteil 16 (auch als Interconnectorplatte bezeichnet, wobei dieser Begriff im Weiteren verwendet wird) aufgesetzt, wobei in Richtung der Elektrodenstruktur 22 Aufnahmen 12 für ein Speichermedium 14 in Form von Vertiefungen 13 eingebracht sind. Es handelt sich hierbei um die Speicherseite 20 der Interconnectorplatte 16, die analog dazu in der umgekehrten Explosionsdarstellung nach Figur 3 zu erkennen ist.

Die Interconnectorplatte 16 weist auf der Rückseite wiederum eine Luftzuführseite 18 auf, die analog der Luftzuführseite 18 der Grundplatte 42 ausgestaltet ist. Auch diese Luftzuführungsseite 18 weist eine ebene Fläche 50 auf, auf die wiederum eine Dichtung 46 aufgebracht ist, es folgt eine weitere Elektrodenstruktur 22 und nun eine Bodenplatte 44, die in diesem Fall wiederum die Aufnahme 12 für ein Speichermedium 14 in Form von Vertiefungen 13 aufweist.

Auf diese Bodenplatte 44 ist eine Luftverteilungsplatte 48 aufgebracht, die zum Einlass des Prozessgases, nämlich der Luft in den Stack 2 dient.

Die Luftverteilungsplatte 48 weist dabei Vertiefungen 56 bzw. 56' auf, die zum Einlass (56) bzw. Auslass (56') der Luft, die als Prozessgas dient, dienen. Ferner weist die Luftverteilungsplatte 48 Vertiefungen 58 bzw. 58' auf, über die Wasserdampf in den Stack 2 geleitet werden kann und über die der Wasserdampf in dem Stack verteilt wird. Sowohl die Vertiefungen 56, 56' als auch die Vertiefungen 58, 58' weisen Bohrungen 60 bzw. 62 auf, die zur Betriebsmittelzufuhr dienen. Als Betriebsmittel dienen insbesondere die Luft bzw. der Wasserdampf oder ein Spülgas. Gemäß Figur 3 folgt auf die Luftverteilungsplatte 48 eine Bodenplatte 44, die mit dieser in bevorzugter Weise durch ein Fügeverfahren insbesondere durch ein Heißlöteverfahren stoffschlüssig verbunden ist. Im zusammengesetzten Stack 6 bilden die Luftverteilungsplatte 48 und die Bodenplatte 44 somit ein einziges gefügtes Bauteil. Die Bodenplatte 44 weist Aussparungen 64 und 65 auf, die wie in der Explosionsdarstellung gemäß Figur 3 zu erkennen ist, über den jeweiligen Vertiefungen 56 für die Luftzufuhr bzw. der Vertiefungen 60, 60' für die Wasserzufuhr liegen.

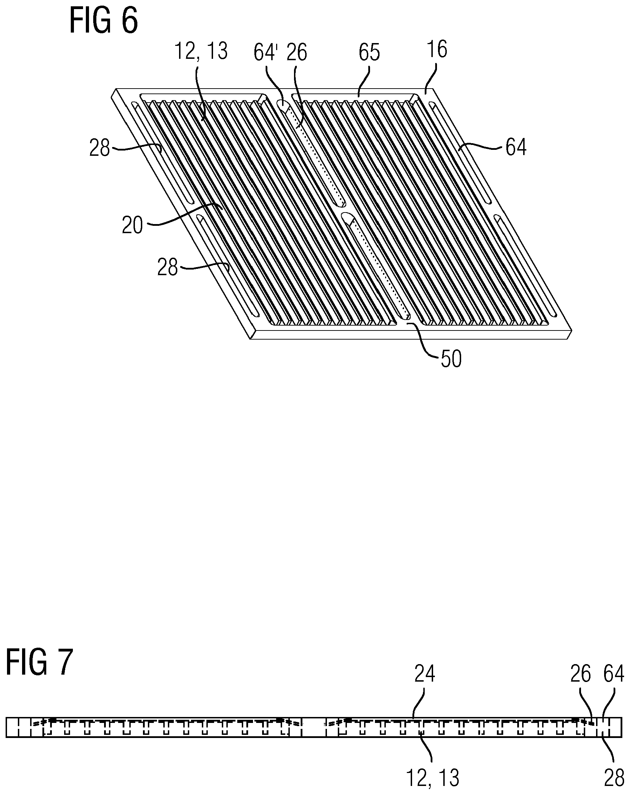

Die Luft, die über die Vertiefungen 56 in den Stack eingebracht wird strömt somit durch die Aussparungen 64 im Randbereich der Bodenplatte 44 nach oben. Diese Aussparungen 64 zur Luftzufuhr weisen Bohrungen 26 auf, die in der perspektivischen Darstellung gemäß Figur 2 bzw. detaillierter in den Figuren 5 und 7 zu erkennen sind. Diese Bohrungen 26 dienen dazu, die Luft in Kanäle 24 zu bringen, die mit der Luftelektrode 34 in Verbindung stehen. Die Luft wird somit aus den Aussparungen 64 in die Bohrungen 26 abgezweigt und werden somit der entsprechenden Luftelektrode 34 zugeführt.

Bei der beschriebenen Strömungsrichtung der Luft handelt es sich lediglich um ein exemplarisches Beispiel. Grundsätzlich kann die Luft auch in entgegen gesetzter Richtung geleitet werden. Es ist ferner durch die beschriebene Luftverteilungsplatte möglich ohne erheblichen technischen Aufwand und unter Beibehaltung des grundsätzlichen vorteilhaften Stack-Aufbaus mit seiner relativ einfachen Montage, eine andere Luftverteilung zu generieren, wenn dies aus thermischen Gründen notwendig sein sollte.

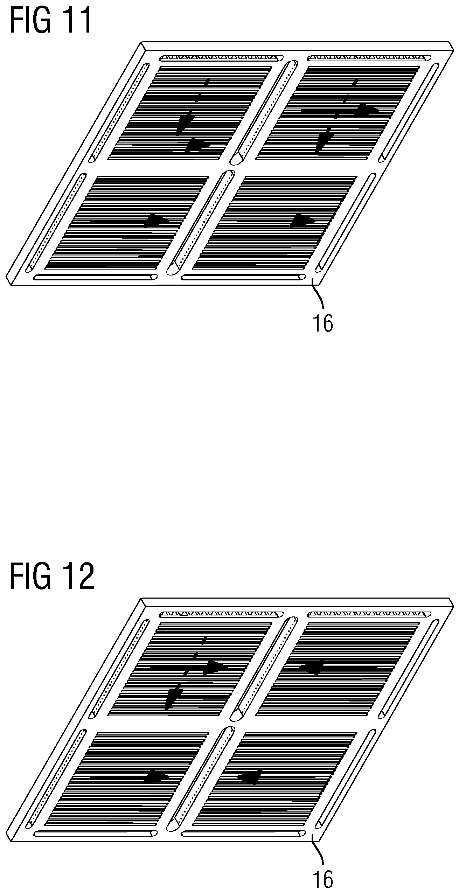

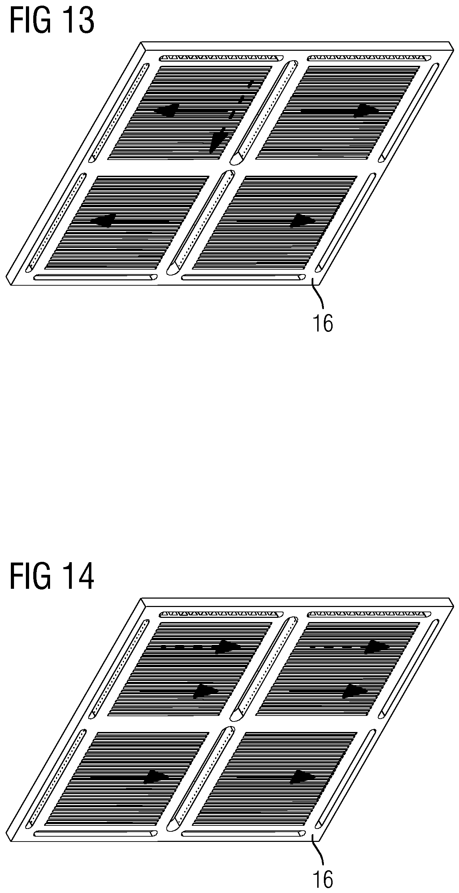

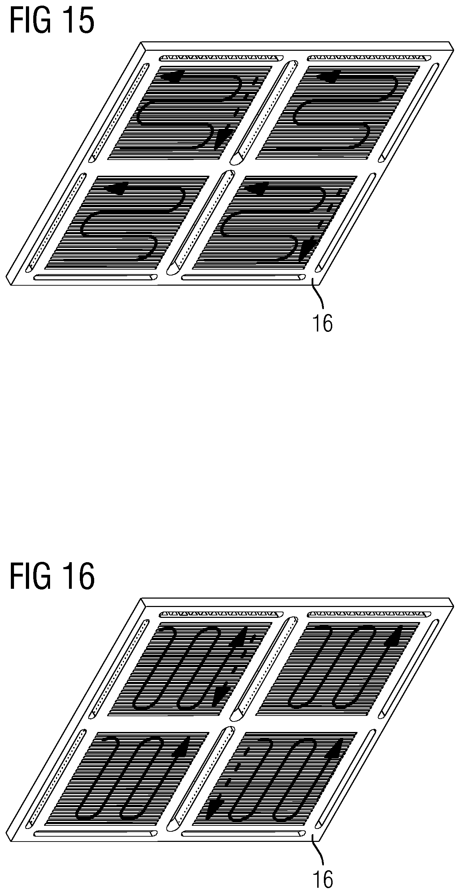

Durch die chemische Reaktion, die sich in den Zellen abspielt, weißt auch das Prozessgas, also die Luft in ungünstigen Fällen einen erheblichen Temperaturgradienten über den gesamten Strömungsverlauf auf. Dieser Temperaturgradient kann wiederum zu thermischen Spannungen in den einzelnen Komponenten, wie beispielsweise der Interconnectorplatte 16 führen. Zur Vermeidung bzw. Reduktion dieser thermischen Spannungen wird der Strömungsverlauf der Luft entsprechend angepasst. Je nachdem wie viele Zellen 4 und in welcher geometrischen Anordnung diese in den einzelnen Schichtfolgen 54, 54' angeordnet sind, können verschiedene Luftströmungswege thermisch zweckmäßig sein. In dem beschriebenen Ausführungsbeispiel handelt es sich grundsätzlich um einen Kreuzstrom, da sich die Richtung der Luftkanäle 24 und die Richtung der Vertiefungen 13 (gestrichelte Pfeile in den Figuren 11 bis 16) für das Speichermedium 14 im 90°-Winkel zueinander verlaufen. Dieser Kreuzstrom kann beispielsweise wie in den Figuren 11 bis 13 angedeutet, verlaufen. Im Gegensatz dazu spricht man von einem Gleichstrom, wenn die Vertiefungen 13 und die Kanäle 24 wie in Figur 14 gezeigt, auf der Interconnectorplatte 16 parallel verlaufen würden. In de Figuren 15 und 16 ist ein meanderförmiger Verlauf des Luftstroms beschrieben, der im Gleichstrom oder Gegenstrom geführt sein kann. Die unterschiedlichen Strömungsverläufe setzen selbstverständlich entsprechende Anpassungen der Komponenten der Wasserdampfzuführvorrichtung und der Luftzuführvorrichtung 28 voraus, die in den Figuren 11 bis 16 nicht explizit dargestellt sind.

Über der Bodenplatte 44 ist die Interconnectorplatte 16 (bzw. das integrierte Bauteil 16) aufgebracht, die ebenfalls Aussparungen 64, 64' aufweist, die mit den Aussparungen 64 der Bodenplatte 44 einen Luftkanal bilden. Da der Luftkanal gemäß der Figuren 2 und 3 durch die Stapelungen der Aussparungen 64 gebildet wird und als ganzes nicht zu erkennen ist, ist er auch nicht einem Bezugszeichen versehen. Dieser Luftkanal verläuft weiter durch die Interconnectorplatte durchläuft ebenfalls eine Dichtung 46, die ebenso wie die Bodenplatte 44 und die Interconnectorplatte 16 die wie diese jeweils kongruente Aussparungen 47 aufweist, durch die die Luft bzw. der Wasserdampf hindurchströmen kann und die ebenfalls den Luftkanal mit bilden.

Es können nun je nach Ausgestaltung des Stacks 2 mehrere Interconnectorplatten 16 folgen, in den Figuren 2 und 3 ist jeweils nur eine Interconnectorplatte 16 abgebildet, auf die nun eine sogenannte Deckplatte 42 folgt. Die Deckplatte 42 weist wiederum Vertiefungen 66 für die Luftzufuhrvorrichtung auf. Die Vertiefungen 66 in der Deckplatte 42 weisen ebenfalls wiederum Bohrungen 26 auf, die in Kanäle 24 führen, die ebenfalls mit der Luftelektrode 34 einer elektrischen Energiespeicherzelle 4, 4' in Verbindung steht. Der Luftkanal des Stacks 2 ist somit in der Art aufgebaut, dass die Luft an den einzelnen Speicherzellen 4 vorbeiströmt und durch die Bohrungen 26 zu den jeweiligen Luftelektroden 34 der einzelnen Zellen 4 abgezweigt werden. In der Deckplatte 42 wird die Luft entsprechend umgeleitet und durch Vertiefungen 64', die in dieser Ausgestaltungsform in der Mitte der jeweiligen Platte also der Bodenplatte 44, der Deckplatte 42 oder der Interconnectorplatte 16 angeordnet sind, und die wiederum einen Luftkanal bilden, zurück zur Luftverteilerplatte 48 geleitet. Dort stehen diese Vertiefungen und dieser Luftkanal in Verbindung mit der Vertiefung 56' in der Luftverteilerplatte und die Luft wird über die Bohrung 60' aus dem Stack wieder ausgeleitet.

Die Vertiefungen 56 dienen demnach dazu, die Luft, die in den Stack eingebracht wird, auf die einzelnen Luftkanäle und im Weiteren auf die einzelnen Speicherzellen, von denen es pro Stackebene mehrere geben kann (gemäß Beispiel in Figur 3 und Figur 4 sind es vier Speicherzellen pro Ebene) zu verteilen. Die Vertiefung 56' dienen dazu die aus den Luftkanälen zurückgeführte Luft zu sammeln und gegebenenfalls wieder aus dem Stack auszuleiten. Grundsätzlich kann die Luft von der Vertiefung 56' aus auch wieder erneut zumindest teilweise dem Kreislauf zugeführt werden.

Das gesamte System zur Luftzuführung umfasst demnach die Bohrungen 60, 60', die Vertiefungen 56, 56', die Bohrungen 26 zu den Kanälen 24, die Aussparungen 64, 64' sowie die Vertiefungen 66, 66' die zusammen die nicht bezeichneten Luftkanäle bilden. Dieses gesamte System wird als Luftzufuhrvorrichtung 28 bezeichnet. In der technischen Terminologie ist hier auch der Begriff Manifold gebräuchlich.

Analog zur gerade beschriebenen Luftzufuhrvorrichtung 28 soll nun noch auf die Wasserdampfzufuhrvorrichtung 70 eingegangen werden. Hierzu ist insbesondere Figur 3 zu beachten, wobei wiederum von der Luftverteilungsplatte 48 ausgegangen wird, die ebenfalls Vertiefungen 60 aufweist, über die durch Bohrungen 62, 62' Wasserdampf bzw. eine Spülgas in den Stack eingeleitet werden kann. Dieser Wasserdampf wird über die Vertiefungen 60 in Aussparungen 65 der Bodenplatte 44 bzw. der Interconnectorplatte 16 geleitet. Diese Aussparungen 65 bilden wiederum einen nicht bezeichneten Kanal zur Wasserdampfleitung, einen Wasserdampfkanal. Hierbei strömt der Wasserdampf nicht wie die Luft in dem Luftkanal sondern der Wasserdampf liegt erfindungsgemäß stationär mit einem Überdruck von beispielsweise 20 mbar gegenüber dem Umgebungsdruck vor. Die Aufgabe des Wasserdampfkanals bzw. der gesamten Wasserdampfzufuhrvorrichtung 70 besteht insbesondere darin, den Wasserdampfdruck für das Speichermedium 14 möglichst konstant zu halten. Sollte der Wasserdampfdruck abfallen, kann dieser durch die Wasserdampfzufuhrvorrichtung von außen nachreguliert werden. Die Wasserdampfkanäle stehen insbesondere in direkter Verbindung mit den Vertiefungen 13 auf der Speicherseite 20 der Interconnectorplatte 16 und mit dem Speichermedium 14.

Im Hinblick auf die Wasserdampfatmosphäre im Stack dienen ebenfalls die Vertiefungen 58, 58' in der Luftverteilerplatte 48 zur Verteilung auf die Wasserdampfkanäle des Stacks, die jede einzelne Speicherzelle 4 mit Wasserdampf versorgen. Das besondere an der Luftverteilerplatte 48 ist, dass in ihr neben der Luftverteilung auch die Wasserdampfverteilung integriert ist, was den gesamten Aufbau des Stacks weniger kompliziert gestaltet und die Montage vereinfacht.

Grundsätzlich muss die Luftverteilerplatte 48 nicht unbedingt zwei bzw. drei Vertiefungen für die Luftzufuhrvorrichtung 28 bzw. Wasserdampfzufuhrvorrichtung 70 umfassen. Die Luftabfuhr aus dem Stack 2 kann auch über eine weitere, hier nicht dargestellte Platte auf der gegenüberliegenden Seite der Luftverteilungsplatte 48 erfolgen. Der hier beschriebene Aufbau ist jedoch sehr zweckmäßig, platzsparend und bauteilsparend und in der Montage sehr kostengünstig.

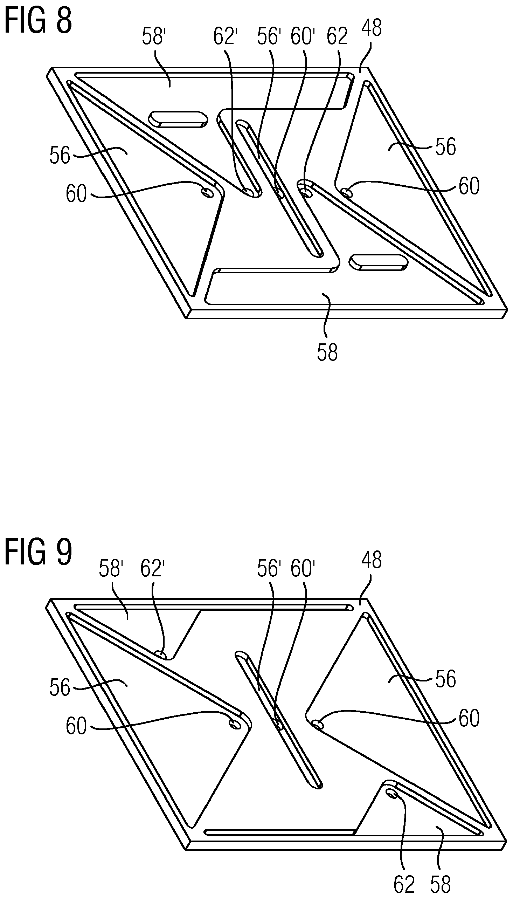

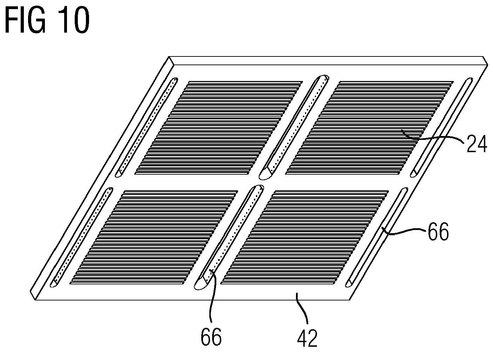

In den Figuren 8 und 9 ist die Luftverteilungsplatte 48 noch einmal einzeln in vergrößerter Darstellung abgebildet, hierbei handelt es sich um zwei alternative Ausgestaltungsformen der Luftverteilungsplatte 48 mit gleicher Wirkung. Die Figur 10 zeigt eine vergrößerte Darstellung der Deckplatte 42.

Die Wasserdampfzufuhrvorrichtung 70 umfasst hierbei insbesondere die nicht bezeichneten Wasserdampfkanäle, die aus den Aussparungen 65 in der Bodenplatte 44 bzw. der Interconnectorplatte 16 gebildet sind, sowie die Vertiefungen 58 bzw. 58' in der Luftverteilungsplatte 48 und die Bohrungen 62 in der Luftverteilungsplatte 48.

Es soll im Folgenden noch kurz auf die Montage des Stacks 2 eingegangen werden. Wie bereits erwähnt wird zunächst die Luftverteilungsplatte 48 mit der Bodenplatte 44 verlötet. Diese beiden Platten bilden nun ein einziges stoffschlüssig verbundenes Bauteil. Auf diesem Bauteil, das mit der Speicherseite 20 nach oben zeigt, werden nun die Elektrodenstrukturen 22, sowie die Dichtungen 46, die auf den ebenen Flächen 50 aufliegen, aufgesetzt. Es folgt nun die Interconnectorplatte 16, wobei hierbei die Luftseite nach unten zeigt und die Elektrodenseite nach oben. Es folgen wiederum Elektrodenstrukturen 22, 22' sowie Dichtungen 46. Abschließend wird nach gegebenenfalls weiteren Schichtfolgen 54 von weiteren Interconnectorplatten 16, Elektrodenstrukturen 22 und Dichtungen 46 und die Deckplatte 42 aufgelegt. Dieser so zusammengesetzte Stack 2 wird nun bei einer bestimmten Temperatur bevorzugt über 800°C wärmebehandelt. Hierbei schmelzen die Dichtungen 46, die beispielsweise aus einer Glasfritte bestehen zumindest teilweise auf und verkleben somit die einzelnen Komponenten also die Interconnectorplatten 16 bzw. die Deckplatte 42, Bodenplatte 44 miteinander und dichten diese ab. Die Dichtungen 46 bilden hierbei bevorzugt amorphe und kristalline Komponenten gleichzeitig aus, weshalb hierbei von einer sogenannten Glaskeramik gesprochen werden kann. Auf eine Verschraubung des Stacks kann durch diese Montagemethode in der Regel verzichtet werden.

Die Interconnectorplatte 16 stellt somit in effizienter Form jeweils eine Gehäuseplatte einer Zelle 4 sowie einer zweiten Zelle 4' dar. Es weist auf jeder Seite ebene Flächen 50 auf, die dazu geeignet sind, dass gesamt integrierte Bauteil bzw. durch dieses eingschlossene Zellen 4 in einfacher und effizienter Weise abzudichten. Es ist dabei anzumerken, dass jede Schicht eines Stacks 2 mehrere Zellen 4 umfassen kann. Im vorliegenden Beispiel sind auf der Bodenplatte 42 bzw. der Interconnectorplatte 16 und der Deckplatte 44 die Strukturen für jeweils vier Speicherzellen 4 aufgebracht. Jede Schichtfolge 54 von Bodenplatte 44, Dichtung 46, Elektrodenstruktur 22 und die Interconnectorplatte 16 liefert somit vier einzelne Speicherzellen 4, 4'.

Bei den Darstellungen nach Figur 2 und 3 wurde der Übersichtlichkeit halber jeweils nur eine Abfolge unter Verwendung einer Interconnectorplatte 16 dargestellt. Grundsätzlich kann der Stack 2 in vorteilhafter Weise selbstverständlich mehrere Schichtfolgen 54, 54' von Zellen 4 und 4' unter Verwendung einer höheren Anzahl von Interconnectorplatten 16 enthalten. Eine Anzahl von zehn Schichtfolgen 54 von Zellen 4, 4' mit jeweils zwei bis acht Zellen 4 pro Schichtfolgen 54 kann hierbei unter Berücksichtigung des prozesstechnischen Aufwandes der Luftverteilung zweckmäßig sein.

In Figur 4 ist eine Querschnittdarstellung aus einem Ausschnitt eines Stacks 2 im zusammengesetzten Zustand gegeben, wobei hierbei die einzelnen Schichten der Elektrodenstruktur 22 detaillierter dargestellt sind. Hierbei handelt es sich jedoch um eine stark schematisierte Darstellung, die in keiner Weise als maßstabsgetreu anzusehen ist. Quer durch den Schichtaufbau nach Figur 4 sind hier gestrichelte Linien 52 gezeichnet, die außenseitig durch eine geschweifte Klammer mit dem Bezugszeichen 4 und 4' versehen sind, wobei diese beiden gestrichelten Linien 52, 52' den Abschluss einer Zelle 4 bzw. einer Schichtfolgte 54 darstellen. Die gestrichelten Linien 50 verlaufen dabei quer durch die Interconnectorplatte 16, das wie beschrieben, jeweils Bestandteil zweier aufeinanderfolgenden Zellen 4, 4' ist. Die Beschreibung soll nun von der gestrichelten Linie 52 aus beginnen, sie beschreibt eine Ebene, die parallel zur ebenen Fläche 50 durch die Interconnectorplatte 16 verläuft. Oberhalb der gestrichelten Linie 52 verlaufen die Kanäle 24, die über Bohrungen 26 mit der in Figur 4 nicht dargestellten Luftzuführvorrichtung 28 verbunden sind. Die durch die Kanäle 24 strömende Luft steht im direkten Kontakt mit der Luftelektrode 34, an der Sauerstoffatome zu Sauerstoffionen ionisiert werden, die Sauerstoffionen O²⁻ wandern durch einen Festkörperelektrolyten 36 zur Speicherelektrode 38. Die Speicherelektrode 38, die beispielsweise aus Nickel besteht, das mit den Ytrium verstärkten Zirkonoxid gemischt ist, ist auf einer Substratstruktur 40 aufgesetzt, die im Wesentlichen dieselbe chemische Zusammensetzung wie die Speicherelektrode 38 aufweist, sich jedoch bezüglich ihrer Porösität und ihrer Mikrostruktur von dieser unterscheidet. Die Substratstruktur 40 dient dazu, die Elektroden 34, 38 bzw. den Festkörperelektrolyten 36, die eine sehr dünne Ausdehnung von wenigen µm haben, zu tragen. Grundsätzlich kann die Substratstruktur 40 auch auf der Luftelektrodenseite aufgebracht sein.

Die Sauerstoffionen werden an der porösen negativen Elektrode 38 mit molekularem Wasserstoff in Verbindung gebracht, und zu Wasser aufoxidiert. Das Wasser diffundiert durch die Poren der Substratstruktur 40 zur Aufnahme 12 für das Speichermedium 14. Die Aufnahme 12 für das Speichermedium 14 ist, wie in Figur 6 näher dargestellt ist, in Form von kanalförmigen Vertiefungen 13 ausgestaltet. Diese Vertiefungen 13 weisen insbesondere eine Tiefe von mehr als 2 mm, bevorzugt etwa 6-10 mm auf. In diesen Vertiefungen 13 sind gepresste Stifte aus Eisen bzw. Eisenoxid eingelegt. Dieses Eisen bzw. Eisenoxid (je nach Betriebszustand Laden oder Entladen liegt der oxidierte oder reduzierte Zustand vor) dient als Speichermedium 14. Diese gepressten Stifte sind porös ausgestaltet, so dass der Wasserdampf in alle Poren und somit an alle Oberflächen des Speichermediums 14 gelangen kann. Somit herrscht in den Vertiefungen 13 eine Wasserdampfatmosphäre vor.

In den Figuren 5-7 ist eine detaillierte Darstellung der Interconnectorplatte 16 gegeben. Hierbei zeigt die Figur 5 einen Blick auf die Luftzuführungsseite 18 der Interconnectorplatte 16, wobei auf einer Platte der Interconnectorplatte 16 in dieser Ausgestaltungsform die Luftzuführung für jeweils vier einzelne Speicherzellen aufgebracht ist. Die Luftzuführungsseite 18 der Interconnectorplatte 16 weist die einzelnen Kanäle 24 auf, wobei zu erkennen ist, dass die Kanäle 24 über Bohrungen 26 mit der gesamten Luftzuführungsvorrichtung 28 des Stacks 2 in Verbindung stehen. Bei dieser Ausgestaltungsform handelt es sich um einzelne geradlinig verlaufende Kanäle 24, die jeweils eine Bohrung 26 im Eingang sowie, hier nicht dargestellt, eine weitere Bohrung zum Luftauslass in die allgemein bezeichnete Luftzuführungsvorrichtung 28 aufweisen.

In Figur 6 ist die Speicherseite 20 der Interconnectorplatte 16 zu sehen, die auf der Rückseite der Luftzufuhrseite 18 gemäß Figur 4 angeordnet ist. Die Speicherseite weist ebenfalls kanalförmige Vertiefungen 13 auf, die als Aufnahme 12 für das hier nicht dargestellte Speichermedium 14 dienen. Sowohl in Figur 5 als auch in Figur 6 sind die ebenen Dichtflächen 50 zu erkennen, auf die die Dichtungen 46 aufgelegt werden und somit jede Seite, die Luftzuführungsseite 18 sowie die Speicherseite 20 gegen die Umgebung abdichten. Somit ist es möglich, einen hohen Grad an Dichtigkeit in den Vertiefungen 13 zu erzielen und somit einen konstanten Gehalt an Wasserdampf im Speichermedium zu gewährleisten.

In Figur 7 ist noch ein Querschnitt durch die Interconnectorplatte gegeben, in dem die bezüglich Figur 4 und 5 beschriebenen Merkmale dieser Darstellung nachvollzogen werden können.

Der thermische Ausdehnungskoeffizient des integrierten Bauteils liegt bevorzugt in der Nähe des Ausdehnungskoeffizienten der Substratstruktur 40. Der Ausdehnungskoeffizient sollte zwischen 12 x 10⁻⁶ K⁻¹ - 14 x 10⁻⁶ K⁻¹ insbesondere bei 13 x 10⁻⁶ K⁻¹ liegen. Als Material für das integrierte Bauteil bietet sich daher ein ferristischer Stahl mit einem Chromgehalt zwischen 15 Gew.% und 30 Gew.% an.

## Patentansprüche

1. Stack für einen elektrischen Energiespeicher mit mindestens einer Speicherzelle 4, die wiederum eine Speicherelektrode 38 und eine Luftelektrode 34 umfasst, die mit einer Luftzufuhrvorrichtung 28 in Verbindung steht, und die Luftzufuhrvorrichtung 28 eine Luftverteilungsplatte 48 umfasst wobei der Stack 2 zudem eine Wasserdampfzuführvorrichtung 70 umfasst, die im Kontakt mit der Speicherelektrode 38 steht **dadurch gekennzeichnet, dass** der Wasserdampf
mit einem stationären Überdruck gegenüber eines Umgebungsdrucks vorliegt und dass die Luftverteilungsplatte 48 mindestens ein Element der Wasserdampfzufuhrvorrichtung 70 umfasst.

2. Stack nach Anspruch 1, **dadurch gekennzeichnet, dass** die Luftverteilungsplatte 48 mindestens zwei voneinander getrennte Vertiefungen (56, 56', 58, 58') aufweist, die jeweils mit einer Bohrung (60, 62) zur Betriebsmittelzufuhr oder Betriebsmittelabfuhr versehen sind.

3. Stack nach einem der vorhergehenden Ansprüche, **dadurch gekennzeichnet, dass** zudem eine Bodenplatte 44 und mindestens eine Interconnectorplatte 16 vorgesehen sind, die jeweils mindestens zwei vertikal durchgehende Aussparungen 64, 65 aufweisen, die bei Stapelung der Platten im Stack 2 jeweils mindestens einen Luftkanal und mindestens einen Wasserdampfkanal bilden.

4. Stack nach einem der Ansprüche 2 oder 3, **dadurch gekennzeichnet, dass** eine Vertiefung 56, 56' mit dem Luftkanal und die zweite Vertiefung 58, 58' mit dem Wasserdampfkanal in Verbindung steht.

5. Stack nach Anspruch 4, **dadurch gekennzeichnet, dass**
mindestens zwei Wasserdampfkanäle vorgesehen sind, die in Verbindung mit jeweils einer Vertiefung 58, 58' stehen.

6. Stack nach einem der vorhergehenden Ansprüche, **dadurch gekennzeichnet, dass** eine Deckplatte 42 vorgesehen ist, die mit einer der Luftelektroden 34 in Verbindung steht.

7. Stack nach Anspruch 6, **dadurch gekennzeichnet, dass** die Deckplatte 42 Vertiefungen aufweist, die mit dem Luftkanal in Verbindung stehen und von denen mindestens eine Bohrung 26 zu einem Kanal 24 führt der im direkten Kontakt mit der Luftelektrode 34 steht.

## Claims

1. Stack for an electrical energy accumulator having at least one storage cell (4) which in turn comprises a storage electrode (38) and an air electrode (38) which is connected to an air supply apparatus (28), and the air supply apparatus (28) comprises an air distribution plate (48), wherein the stack (2) additionally comprises a water vapor supply apparatus (70) which is in contact with the storage electrode (38), **characterized in that** the water vapor is at a stationary excess pressure in relation to an ambient pressure, and **in that** the air distribution plate (48) comprises at least one element of the water vapor supply apparatus (70).

2. Stack according to Claim 1, **characterized in that** the air distribution plate (48) has at least two recesses (56, 56', 58, 58') which are separate from one another and which are each provided with a hole (60, 62) for supplying working medium or discharging working medium.

3. Stack according to either of the preceding claims, **characterized in that** a bottom plate (44) and at least one interconnector plate (16) are additionally provided, said plates each having at least two vertically continuous cutouts (64, 65) which, when the plates are stacked, each form at least one air channel and at least one water vapor channel in the stack (2).

4. Stack according to either of Claims 2 and 3, **characterized in that** one recess (56, 56') is connected to the air channel, and the second recess (58, 58') is connected to the water vapor channel.

5. Stack according to Claim 4, **characterized in that** at least two water vapor channels are provided, said water vapor channels being connected to in each case one recess (58, 58').

6. Stack according to one of the preceding claims, **characterized in that** a top plate (42) is provided, said top plate being connected to one of the air electrodes (34).

7. Stack according to Claim 6, **characterized in that** the top plate (42) has recesses which are connected to the air channel and at least one hole (26) of which leads to a channel (24) which is in direct contact with the air electrode (34).

## Revendications

1. Empilement pour un accumulateur d'énergie électrique ayant au moins une cellule 4 d'accumulateur, qui comprend à son tour une électrode 38 d'accumulateur et une électrode 34 à air, qui est en liaison avec un dispositif ( 28 ) d'apport d'air et le dispositif 28 d'apport d'air comprend une plaque 48 de répartition d'air,
dans lequel l'empilement 2 comprend en outre un dispositif 70 d'apport de vapeur d'eau, qui est en contact avec l'électrode 38 d'accumulateur, **caractérisé en ce que** la vapeur d'eau est en surpression fixe par rapport à une pression ambiante et **en ce que** la plaque 48 de répartition d'air comprend au moins un élément du dispositif 70 d'apport de vapeur d'eau.

2. Empilement suivant la revendication 1, **caractérisé en ce que** la plaque 48 de répartition d'air a au moins deux cavités ( 56, 56', 58, 58' ), qui sont séparées l'une de l'autre et qui ont chacune un trou ( 60, 62 ) pour l'apport ou l'évacuation d'un fluide de fonctionnement.

3. Empilement suivant l'une des revendications précédentes, **caractérisé en ce qu'**il est prévu en outre une plaque 44 de fond et au moins une plaque 16 d'interconnecteur, qui ont chacune au moins deux évidements 64, 65 continus verticalement qui, lors de l'empilement des plaques en empilement 2, forment chacun au moins un conduit pour de l'air et au moins un conduit pour de la vapeur d'eau.

4. Empilement suivant l'une des revendications 2 ou 3, **caractérisé en ce qu'**une cavité 56, 56' est en communication avec le conduit pour de l'air et la deuxième cavité 58, 58' avec le conduit pour de la vapeur d'eau.

5. Empilement suivant la revendication 4, **caractérisé en ce qu'**il est prévu au moins deux conduits pour de la vapeur d'eau, qui communiquent avec respectivement une cavité 58, 58'.

6. Empilement suivant l'une des revendications précédentes, **caractérisé en ce qu'**il est prévu une plaque 42 de recouvrement, qui est en liaison avec l'une des électrodes 34 à air.

7. Empilement suivant la revendication 6, **caractérisé en ce que** la plaque 42 de recouvrement a des cavités qui sont en communication avec le conduit pour de l'air et dont au moins un trou 26 mène à un conduit 24, qui est en contact direct avec l'électrode 34 à air.
